# EUROPÄISCHE PATENTSCHRIFT

(11) **EP 3 270 027 B1**
(45) Veröffentlichungstag und Bekanntmachung des Hinweises auf die Patenterteilung: **23.10.2019**
(21) Anmeldenummer: 17178920.9
(22) Anmeldetag: 30.06.2017
(51) Int. Cl.: F16L 25/00, E21D 9/00, E21D 11/38, F16L 51/00

(54) **ROHRLEITUNGSABSCHNITT MIT ZWEI VERBUNDENEN VORTRIEBSROHREN**
PIPE SECTION WITH TWO CONNECTED JACKING PIPES
SEGMENT DE CONDUITE COMPRENANT DEUX TUBES DE FONÇAGE RELIÉS ENSEMBLE

(30) Priorität: 12.07.2016 BE 201600126
(43) Veröffentlichungstag der Anmeldung: 17.01.2018
(73) Patentinhaber: Berding Beton GmbH, 49439 Steinfeld (DE)
(72) Erfinder: Berding, Georg, 49078 Osnabrück (DE)
(74) Vertreter: Philipp, Matthias

(56) Entgegenhaltungen:
- DE-U1- 29 906 103
- GB-A- 1 509 902
- US-A- 1 346 687
- US-A- 1 424 586
- US-A1- 2006 243 649

## Beschreibung

Die Erfindung betrifft einen Rohrleitungsabschnitt mit mindestens zwei verbundenen Vortriebsrohren, wobei ein erstes Vortriebsrohr ein Muffenende mit einem Stahlführungsring und ein zweites Vortriebsrohr ein in dem Muffenende aufgenommenes Spitzende mit einer Elastomerdichtung aufweist, wobei jedes Vortriebsrohr einen stahlbewehrten Außenmantel, einen stahlbewehrten Innenmantel und einen zwischen Innen- und Außenmantel angeordneten und damit verbundenen Zwischenmantel aufweist, wobei sich der Innenmantel über eine kürzere axiale Länge erstreckt als der Zwischenmantel, und in einem Verbindungsbereich zwischen den Vortriebsrohren ein innerer Spaltbereich zwischen den Innenmänteln gebildet ist.

Ein derartiger Rohrleitungsabschnitt, der in der Regel aus einer größeren Anzahl von jeweils endseitig untereinander verbundenen Vortriebsrohren besteht, ist aus der Praxis wie auch aus der DE 299 06 103 U1 bekannt, wobei die in dem Verbindungsbereich benachbarten Blechmäntel der Vortriebsrohre in der Regel durch ein aufgeschweißtes bandförmiges Dichtelement aus Stahlblech dicht miteinander verbunden werden und anschließend der Spaltbereich zur Verhinderung von Korrosion mit einem Mörtelmaterial verfüllt wird. Dies hat den Nachteil, dass benachbarte Vortriebsrohre im Wesentlichen starr miteinander verbunden sind, so dass kaum eine Bewegungs- oder Ausgleichsmöglichkeit besteht.

Erfindungsgemäß wird vorgeschlagen, dass in dem inneren Spaltbereich freiliegende Endabschnitte der Zwischenmäntel der Vortriebsrohre durch ein umlaufendes elastisches Deckelement dicht miteinander verbunden sind. Aufgrund der Elastizität des Deckelements erhalten benachbarte Vortriebsrohre die Möglichkeit zu einer entlang und/oder quer und/oder untere einem Winkel zu ihrer Längsachse gerichteten Ausgleichsbewegung.

Die Zwischenmäntel bestehen aus Stahl und weisen im Bereich des inneren Spaltbereichs jeweils einen Endabschnitt aus Kunststoff oder Edelstahl auf, der mit dem übrigen Blechmantel verklebt oder verschweißt ist.

Das Deckelement besteht aus Kunststoff oder Metall, insbesondere aus Edelstahl.

Das Deckelement kann eine im Längsschnitt gesehen gewellte oder mehrfach abgewinkelte Form aufweisen und insbesondere hutförmig oder zickzackförmig ausgebildet sein.

Weiter ist das Deckelement mit den Endabschnitten der Zwischenmäntel verklebt oder verschweißt.

Bevorzugt ist vorgesehen, dass das Deckelement so ausgebildet ist, dass es eine Verlagerung des ersten Vortriebsrohrs relativ zu dem zweiten Vortriebsrohr um einen Winkel von mindestens ± 5°, ± 3° oder ± 1° und/oder in Längsrichtung und/oder in Querrichtung um mindestens 20 mm, 10 mm, 5 mm oder 1 mm zulässt.

Zweckmäßigerweise ist vorgesehen, dass die Vortriebsrohre zylindrisch sind, beispielsweise kreiszylindrisch, rechteckig, quadratisch oder mit einem ovalen oder maulförmigen Querschnitt.

Die beiden bzw. sämtliche Vortriebsrohre des Rohrleitungsabschnitts sind zweckmäßigerweise identisch und weisen jeweils ein Muffen- und ein Spitzende auf.

Bevorzugt ist der Innenmantel so ausgelegt, dass ein Betriebsdruck des Rohrleitungsabschnitts von dem Innenmantel aufgenommen werden kann, bspw. 1 bar, 2 bar, 3 bar oder 4 bar Überdruck.

Die Erfindung wird nachfolgend anhand eines Ausfiihrungsbeispiels erläutert, wobei auf eine Zeichnung Bezug genommen ist, in der
Fig. 1 eine schematische Längsschnittansicht eines Ausschnitts aus einem Rohrleitungsabschnitt mit (mindestens) zwei verbundenen Vortriebsrohren zeigt, und
Fig. 2 eine Schnittansicht des in dem Rohrleitungsabschnitt nach Fig. 1 verwendeten Deckelements zeigt.

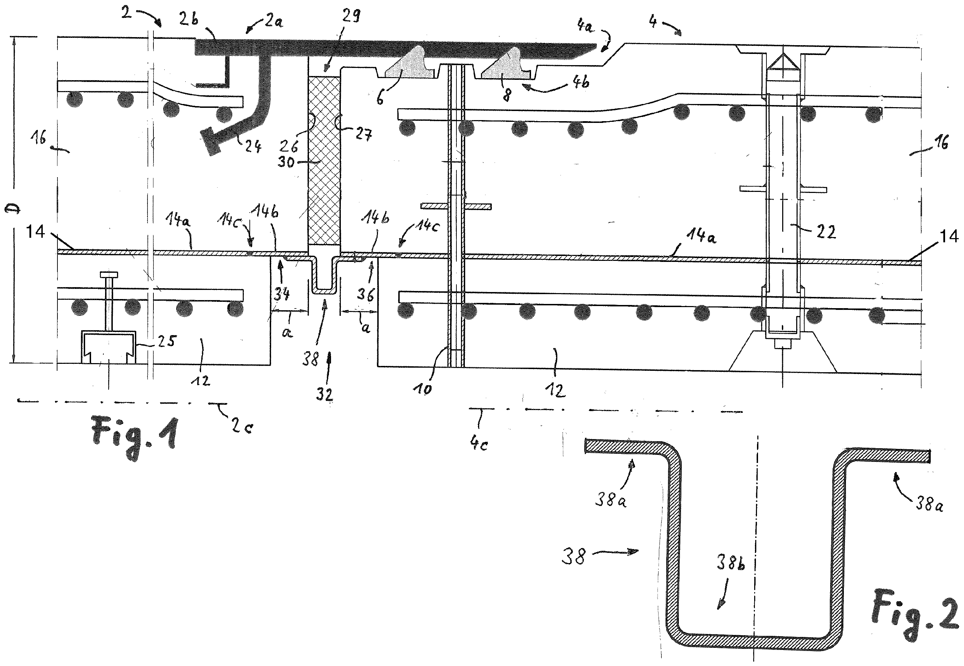

Fig. 1 zeigt in einer schematischen Längsschnittansicht einen Teil eines Rohrleitungsabschnitts, der aus mindestens zwei Vortriebsrohren gebildet ist, genauer gesagt einen Ausschnitt oder Verbindungsbereich von zwei miteinander verbundenen Vortriebsrohren 2, 4, wobei ein erstes Vortriebsrohr 2 ein Muffenende 2a mit einem Stahlführungsring 2b aufweist, und ein zweites Vortriebsrohr 4 ein in dem Muffenende 2a aufgenommenes Spitzende 4a mit einer Elastomerdichtung 4b aufweist. Die Vortriebsrohre 2, 4 sind in dem dargestellten Beispiel kreiszylinderförmig mit einer ersten Längsachse 2c des ersten Vortriebsrohrs 2 und einer zweiten Längsachse 4c des zweiten Vortriebsrohrs 4. Selbstverständlich sind die Rohre 2, 4 in der Regel identisch, wobei jedes von ihnen an entgegengesetzten Enden ein Muffenende und ein Spitzende aufweist.

Die Elastomerdichtung 4b des zweiten Vortriebsrohrs 4 ist in dem dargestellten Beispiel aus zwei axial beabstandeten Dichtungselementen 6, 8 gebildet, zwischen denen eine radial durch die Wandstärke des zweiten Vortriebsrohrs 4 verlaufende Prüföffnung 10 bzw. zwei diametral gegenüberliegende Prüföffnungen angeordnet ist bzw. sind.

Jedes Vortriebsrohr 2, 4 weist einen Stahlbetonmantel auf, der radial von innen nach außen gesehen einen stahlbewehrten Innenmantel 12, einen zylindrischen Zwischenmantel 14 und einen stahlbewehrten Außenmantel 16 umfasst. Der Zwischenmantel 14 ist an seiner Innenseite mit dem Innenmantel 12 und an seiner Außenseite mit dem Außenbereich 16 verbunden. In dem Innenmantel 12 ist eine innere Stahlarmierung 18 eingebettet, und in dem Außenmantel 16 ist eine äußere Stahlarmierung 20 eingebettet. In einem Abstand von dem Spitzende 4a ist eine bzw. sind mehrere über den Umfang verteilte radial gerichtete Abgabeöffnung(en) 22 angeordnet, die dazu dienen, ein Gleithilfsmittel, etwa Bentonit, während des Vortriebsvorgangs zwischen Erdreich und Vortriebsrohr zu pressen.

Der Stahlführungsring 2b des Muffenendes 2a ist durch Kopfbolzen 24 in dem Außenmantel 16 eines jeden Vortriebsrohrs verankert. In dem Innenmantel 12 können Befestigungs- oder Anbringungselemente wie beispielsweise eine Befestigungsschiene 25, auch als Halfenschiene bezeichnet, eingelassen und verankert sein.

Um eine Beschädigung der zueinander weisenden Stirnseiten 26, 27 der Vortriebsrohre durch die erheblichen axial gerichteten Vortriebskräfte zu vermeiden, ist zwischen die Stirnseiten in einem äußeren Spaltbereich 29 im Verbindungsbereich der Rohre ein Druckübertragungsring 30 eingesetzt, der insbesondere aus einem OSB-Material bestehen kann.

Der Innenmantel 12 des Stahlbetonmantels der Vortriebsrohre weist eine kürzere axiale Länge auf als der Außenmantel 16 und der Zwischenmantel 14, wobei diese eine gleiche Länge haben, so dass im Bereich von Muffenende 2a und Spitzende 4a jeweils ein Teil einer inneren Oberfläche des Zwischenmantels 14 an Endabschnitten 34, 36 freiliegt. Bei einer Wandstärke D eines Vortriebsrohrs von beispielsweise 300 mm kann der Innenmantel 14 an beiden Rohrenden etwa um 60 mm (Maß a) kürzer sein als der Zwischenmantel und der Außenmantel, oder allgemein kann der Innenmantel an jedem Ende um einen Betrag von mindestens 5 %, 10 % oder 20% der Wandstärke des Vortriebsrohrs kürzer sein als Außenmantel und Zwischenmantel.

Aufgrund der geringeren Länge des Innenmantels 12 im Vergleich zu Zwischenmantel 14 und Außenmantel 16 ergibt sich im Verbindungsbereich zweier benachbarter Vortriebsrohre ein innerer Spaltbereich 32, in dem sich die nach innen freiliegenden Endabschnitte 34, 36 der Zwischenmäntel 14 befinden.

Erfindungsgemäß sind die freiliegenden Endabschnitte 34, 36 der Zwischenmäntel 14 durch ein elastisches Deckelement 38 dicht miteinander verbunden, welches sich über den gesamten inneren Umfang der Zwischenmäntel erstreckt. In dem erfindungsgemäßen, dargestellten Beispiel besteht der Zwischenmantel 14 eines jeden Vortriebsrohrs aus einem Mittelstück 14a aus Stahlblech, beispielsweise aus einem Material S355 J2, und zwei damit jeweils endseitig verschweißten Endstücken 14b aus V2A Edelstahl (insbesondere Werkstoff 1.4301), wobei die Endstücke 14b jeweils umlaufend mit dem Mittelstück 14a verschweißt sind. Das Mittelstück 14a des Zwischenmantels ist kürzer als der jeweilige Innenmantel 12, so dass die Schweißstelle 14c zwischen Mittelstück 14a und Endstück 14b jeweils noch von einem Teil des Innenmantels 12 überdeckt wird. Das Deckelement 38 besteht bevorzugt ebenfalls aus V2A Edelstahl (insbesondere Werkstoff 1.4301).

Das Deckelement 38 (Fig. 2) ist in dem dargestellten Beispiel im Schnitt hutförmig mit zwei axial oder zylindrisch verlaufenden, mit den Endstücken 14b verschweißten Endbereichen 38a und einem U-förmigen Mittelbereich 38b. Aufgrund dieser Formgebung des Deckelements 38 können sich benachbarte, miteinander verbundene Vortriebsrohre 2, 4 geringfügig relativ zueinander verlagern bzw. bewegen, wodurch die gebildete Rohrleitung eine gewisse Flexibilität erhält. Alternativ zu der dargestellten Hutform kann das Deckelement im Schnitt gewellt, mehrfach abgewinkelt, zickzack- oder ziehharmonikaförmig ausgebildet sein, um die gewünschte Flexibilität oder Bewegungsmöglichkeit der beiden Vortriebsrohre 2, 4 relativ zueinander zu ermöglichen, und zwar hinsichtlich einer Verlagerung der Vortriebsrohre bzw. ihrer Längsachsen 2c, 4c relativ zueinander um einen Winkel von mindestens ± 1°, ± 3° oder ± 5° oder auch mehr, und/oder hinsichtlich einer Verlagerung der beiden Vortriebsrohre in Längs- und/oder Querrichtung relativ zueinander um mindestens 1 mm, 5 mm, 10 mm oder 20 mm, oder auch mehr, je nach Ausbildung des Deckelements 38.

### Bezugszeichenliste

- 2: erstes Vortriebsrohr
- 2a: Muffenende
- 2b: Stahlführungsring
- 2c: erste Längsachse
- 4: zweites Vortriebsrohr
- 4a: Spitzende
- 4b: Elastomerdichtung
- 4c: zweite Längsachse
- 6,8: Dichtungselement
- 10: Prüföffnung
- 12: Innenmantel
- 14: Zwischenmantel
- 14a, 14b: Mittel-, Endstück
- 14c: Schweißstelle
- 16: Außenmantel
- 18: innere Stahlarmierung
- 20: äußere Stahlarmierung
- 22: Abgabeöffnung
- 24: Kopfbolzen
- 25: Befestigungsschiene
- 26, 27: Stirnseite
- 29: äußerer Spaltbereich
- 30: Druckübertragungsring
- 32: innerer Spaltbereich
- 34, 36: Endabschnitt (von 14)
- 38: Deckelement
- 38a: Endbereich
- 38b: Mittelbereich
- D: Wandstärke

## Patentansprüche

1. Rohrleitungsabschnitt mit mindestens zwei verbundenen Vortriebsrohren (2, 4), wobei ein erstes Vortriebsrohr (2) ein Muffenende (2a) mit einem Stahlführungsring (2b) und ein zweites Vortriebsrohr (4) ein in dem Muffenende (2a) aufgenommenes Spitzende (4a) mit einer Elastomerdichtung (4b) aufweist, wobei jedes Vortriebsrohr (2, 4) einen stahlbewehrten Außenmantel (16), einen stahlbewehrten Innenmantel (12) und einen zwischen Innenmantel (12) und Außenmantel (16) angeordneten und damit verbundenen Zwischenmantel (14) aufweist, wobei sich der Innenmantel über eine kürzere axiale Länge erstreckt als der Zwischenmantel, und in einem Verbindungsbereich zwischen den Vortriebsrohren (2, 4) ein innerer Spaltbereich (32) zwischen den Innenmänteln (12) gebildet ist, wobei in dem inneren Spaltbereich (32) freiliegende Endabschnitte (34, 36) der Zwischenmäntel (14) der Vortriebsrohre (2, 4) durch ein umlaufendes elastisches Deckelement (38) dicht miteinander verbunden sind, wobei die Zwischenmäntel (14) aus Stahl bestehen und im Bereich des inneren Spaltbereichs (32) jeweils einen Endabschnitt (34, 36) aus Kunststoff oder Edelstahl aufweisen, der mit dem übrigen Zwischenmantel verklebt oder verschweißt ist, wobei
das Deckelelement (38) aus Kunststoff oder Edelstahl besteht und mit den Endabschnitten (34, 36) der Zwischenmäntel (14) verklebt oder verschweißt ist.

2. Rohrleitungsabschnitt nach Anspruch 1, **dadurch gekennzeichnet, dass** das Deckelement (38) eine im Längsschnitt gesehen gewellte oder mehrfach abgewinkelte Form aufweist und insbesondere hutförmig, zickzack- oder ziehharmonikaförmig ausgebildet ist.

3. Rohrleitungsabschnitt nach einem der Ansprüche 1 oder 2, **dadurch gekennzeichnet, dass** das Deckelement (38) so ausgebildet ist, dass es eine Verlagerung des ersten Vortriebsrohrs (2) relativ zu dem zweiten Vortriebsrohr (4) um einen Winkel von mindestens ± 5°, ± 3° oder ± 1° und/oder in Längsrichtung und/oder in Querrichtung um mindestens 20 mm, 10 mm, 5 mm oder 1 mm zulässt.

4. Rohrleitungsabschnitt nach einem der vorangehenden Ansprüche, **dadurch gekennzeichnet, dass** die Vortriebsrohre (2, 4) zylindrisch sind, insbesondere kreiszylindrisch, rechteckig oder quadratisch, oder mit einem ovalen oder maulförmigen Querschnitt.

5. Rohrleitungsabschnitt nach einem der vorangehenden Ansprüche, **dadurch gekennzeichnet, dass** alle Vortriebsrohre des Rohrleitungsabschnitts identisch sind.

6. Rohrleitungsabschnitt nach einem der vorangehenden Ansprüche, **dadurch gekennzeichnet, dass** der Innenmantel (12) so ausgelegt ist, dass ein Betriebsdruck des Rohrleitungsabschnitts von dem Innenmantel (12) allein aufgenommen werden kann.

## Claims

1. Pipe section comprising at least two connected jacking pipes (2, 4), wherein a first jacking pipe (2) has a sleeve end (2a) with a steel guide ring (2b) and a second jacking pipe (4) has a pointed end (4a), held in the sleeve end (2a), with an elastomer seal (4b), each jacking pipe (2, 4) having a steel-reinforced outer jacket (16), a steel-reinforced inner jacket (12) and an intermediate jacket (14) arranged between inner jacket (12) and outer jacket (16) and connected thereto, wherein the inner jacket extends over a shorter axial length than the intermediate jacket, and an inside gap region (32) between the inner jackets (12) is formed within a connecting area between the jacking pipes (2,4), whereby exposed terminal sections (34, 36) of the intermediate jackets (14) of the jacking pipes (2, 4) within the inside gap region (32) are tightly connected by a circumferential flexible cover element (38), the intermediate jackets (14) consisting of steel and within the area of the internal gap region (32) each having a terminal section (34, 36) made of plastic or high-grade steel, which is bonded or welded to the remaining intermediate jacket, the cover element (38) consisting of plastic or high-grade steel and bonded or welded to the terminal sections (34, 36) of the intermediate jackets (14).

2. Pipe section according to claim 1, **characterized in that** the cover element (38) has a corrugated or multi-angled shape, seen in longitudinal view, and is particularly embodied like a hat, zigzag or concertina.

3. Pipe section in accordance with one of claims 1 or 2, **characterized in that** the cover element (38) is formed so that it allows the first jacking pipe (2) to shift relative to the second jacking pipe (4) by an angle of ± 5°, ± 3° or ± 1° and/or in the longitudinal direction and/or in the transverse direction by at least 20 mm, 10 mm, 5 mm or 1 mm.

4. Pipe section in accordance with one of the preceding claims, **characterized in that** the jacking pipes (2, 4) are cylindrical, particularly circular-cylindrical, rectangular or square, or with an oval or jaw-like cross section.

5. Pipe section in accordance with one of the preceding claims, **characterized in that** all jacking pipes of the pipe section are identical.

6. Pipe section in accordance with one of the preceding claims, **characterized in that** the inner jacket (12) is designed so that an operating pressure of the pipe section can be absorbed solely by the inner jacket (12).

## Revendications

1. Section de tuyau comprenant au moins deux conduites de poussée (2, 4) raccordées, une première conduite de poussée (2) possédant une extrémité à gaine (2a) avec une bague de guidage en acier (2b), et une deuxième conduite de poussée (4) possédant un bout pointu (4a), maintenu dans l'extrémité à gaine (2a), avec un joint élastomère (4b), chaque conduite de poussée (2, 4) possédant une chemise extérieure renforcée en acier (16), une chemise intérieure renforcée en acier (12), et une chemise intermédiaire (14) agencée entre la chemise intérieure (12) et la chemise extérieure (16), et raccordée à celles-ci, la chemise intérieure s'étendant sur une longueur axiale plus courte que la chemise intermédiaire, et une zone d'écartement intérieure (32) entre les chemises intérieures (12) étant formée au sein d'une zone de raccordement entre les conduites de poussée (2, 4), de sorte que des sections terminales (34, 36) des chemises intermédiaires (14) des conduites de poussée (2, 4) au sein de la zone d'écartement intérieure (32) soient raccordées étroitement par un élément de couverture flexible circonférentiel (38), les chemises intermédiaires (14) étant réalisées en acier, et, au sein de la surface de la zone d'écartement intérieure (32), chacune possédant une section terminale (34, 36) réalisée en plastique ou en acier à haute résistance, collée ou soudée à la chemise intermédiaire restante, l'élément de couverture (38) étant réalisé en plastique ou en acier à haute résistance, et étant collé ou soudé aux sections terminales (34, 36) des chemises intermédiaires (14).

2. Section de tuyau selon la revendication 1, **caractérisée en ce que** l'élément de couverture (38) a une forme ondulée ou aux multiples angulations, représentée en vue longitudinale, et est réalisé en particulier en forme de chapeau, de zigzag, ou d'accordéon.

3. Section de tuyau selon une des revendications 1 ou 2, **caractérisée en ce que** l'élément de couverture (38) est formé de façon à permettre le déplacement de la première conduite de poussée (2) relativement à la deuxième conduite de poussée (4) d'un angle de ± 5°, ± 3° ou ± 1° et/ou dans le sens longitudinal et/ou dans le sens transversal d'au moins 20 mm, 10 mm, 5 mm ou 1 mm.

4. Section de tuyau selon une des revendications précédentes, **caractérisée en ce que** les conduites de poussée (2, 4) sont cylindriques, en particulier circulaires-cylindriques, rectangulaires ou carrées, ou présentent une section transversale ovale ou en forme de mâchoire.

5. Section de tuyau selon une des revendications précédentes, **caractérisée en ce que** toutes les conduites de poussée de la section de tuyau sont identiques.

6. Section de tuyau selon une des revendications précédentes, **caractérisée en ce que** la chemise intérieure (12) est conçue de sorte qu'une pression de service de la section de tuyau puisse être absorbée exclusivement par la chemise intérieure (12).
